# EUROPEAN PATENT APPLICATION

(11) **EP 4 607 351 A1**
(43) Date of publication of application: **27.08.2025**
(21) Application number: 24159683.2
(22) Date of filing: 26.02.2024
(51) Int. Cl.: G06F 9/50

(54) **HANDING OF CONTAINERIZED ENVIRONMENTS**

(71) Applicant: ABB SCHWEIZ AG, 5400 Baden (CH)
(72) Inventor: ESKANDANI, Nafise, 64380 Rossdorf (DE); KOZIOLEK, Heiko, 76227 Karlsruhe (DE)
(74) Representative: Maiwald GmbH

(57) **Abstract**

The disclosure concerns a computer-implemented method of handing a containerized environment in connection with services requested by clients, comprising the following steps:
(a) monitoring the time taken for initialization of containers and/or the number of requests containers receive from the client for the service,
(b) determining, based on the monitoring, selected containers amongst the containers,
(c) checkpointing the selected containers and storing a checkpoint per selected container in a container checkpoint cache,
(d) upon request of the client for the service, reading a corresponding checkpoint in the container checkpoint cache and restoring the corresponding selected container from the stored checkpoint, to serve the request.

## Description

### Technical field

The invention concerns a computer-implemented method of handing containerized environments in connection with services requested by a client, a data processing apparatus comprising a processor configured to perform the method, a computer program comprising instructions which, when the program is executed by a computer, cause the computer to carry out the method, and a computer-readable medium comprising instructions which, when executed by a computer, cause the computer to carry out the method.

### Background

Container orchestration platforms, like Kubernetes and Docker Swarm, allocate containers and may be used in any computing environment that supports containers, including public, private, hybrid, and multi-cloud computing environments.

Display call-up time may be important, e.g., 1 s target for opening graphics. However, DCS (Distributed Control System) Software Services in cont ainers often undergo long initialization phases (e.g., >10 seconds up to minutes), especially when they are loading data or establishing network connections. These prolonged processes may lead to waiting periods for users trying to interact with these services. Consequently, users may encounter subpar responsiveness and/or delayed interactions, possibly causing frustration and diminishing their overall satisfaction. These delays may compromise user experience, especially in interactive scenarios. Hence, minimizing these initialization delays may help to enhance user experience, ensure prompter interactions, and improve user satisfaction.

Thus, there is a need for increased speed in connection with container orchestration.

### Summary of the invention

Claim 1 provides a computer-implemented method of handing a containerized environment in connection with services (in particular those that take long time for initialization) requested by clients, comprising the following steps:
(a) monitoring (by a computing device) the time taken for initialization of containers and/or the number of requests containers receive from the client for the service,
(b) determining (by the computing device), based on the monitoring, selected containers amongst the containers,
(c) checkpointing (by the computing device) the selected containers and storing a checkpoint per selected container in a container checkpoint cache,
(d) upon request of the client for the service, reading a corresponding checkpoint in the container checkpoint cache and restoring the corresponding selected container from the stored checkpoint (by the computing device), to serve the request.

Checkpointing a container may be seen as saving a snapshot of the state of a container as a set of images.

Determining selected containers means that, based on the outcome of the monitoring (e.g. repeatedly checking over time, e.g. counting), containers are selected out of the plurality (all) of containers. In particular, by way of the monitoring, a container may be identified and then selected based on the time taken for initialization of containers and/or the number of requests the container receivey from the client for the service. Selected containers may be seen as containers to be cached (or already being cached). For example, containers which take a long time for initialization, e.g. longer than an average initialization (of e.g. 1 - 10 s, more specifically e.g. 2 - 5 s) time, may be selected. Alternatively or additionally, containers which are frequently used may be selected, e.g. the 10% or 30% most frequently used containers.

The present invention may provide for state saving on the level of containers and may be transferable to many services. The present invention relates to caching the state of services after initialization and then quick-starting new instances by restoring the state from the cache.

The present invention may provide (in particular Linux) container checkpointing and restoring in the userspace, in particular in a DCS system.

Accordingly, the system may be seen as learning containers, e.g. (the most) frequently used containers and/or the ones with the longest start-up delays, and (autonomously) snapshotting these selected containers to rapidly being restored later.

The invention may be seen as freezing a running application (or part of it) and checkpointing it to persistent storage as a collection of files. One may then use the files to restore and run the application from the point it was frozen at.

The container checkpointing may allow to autonomously checkpoint the state of services with a long startup delay once they are initialized. A list of such services may be collected by learning the most frequently used services or the ones with the longest startup delays. Checkpointing the state of such services after initialization may allow to enable faster startup of containers upon further requests from the client.

This allows for improved user experience for plant operators. In particular, a faster startup of services is supported. In particular, this may save computing resources for service initializations. This invention supports mitigation of the delayed user interactions for DCS users. In particular, a fast startup of the services may be achieved using service caching. For example, time savings about 1 to 10 s may be achieved.

Optionally, the invention is carried out on a platform like Kubernetes and Docker Swarm. Optionally, the invention is carried out on a Linux system.

The invention may optionally use, as checkpointing and restoring system (in the user space), CRIU (Checkpoint/Restore In Userspace). Hence, the checkpointing and restoring mechanisms may optionally be done using CRIU, the Linux software "Checkpoint/Restore In Userspace".

The invention may include two main phases. In a first phase, steps (a) to (c) are carried out. For example, the cache may be populated with container checkpoints, in particular for services that are (most) frequently used and/or have a long startup delay. The list of containers to be checkpointed may be selected by continuously monitoring the container initialization time and/or the number of requests for each service. In the second phase, step (d) is carried out. In particular, the container may (relatively rapidly) be restored from the cache.

Finally, the client's request is served, based on the restored service concerning the selected container.

Optionally, a dynamic list of the selected containers as determined in step (b) is generated.

Optionally, in step (c), a service caching manager requests checkpointing for the selected containers, optionally the selected containers on a list.

Optionally, in step (c), checkpointing the selected containers includes, per selected container, starting the container, initializing the container and getting the checkpoint.

Optionally, in step (c), storing a checkpoint includes storing the selected container state in a set of images, and writing the checkpoint including the set of images in the container checkpoint cache.

Optionally, in step (d), a service caching manager requests to restore the service.

Optionally, in step (d), restoring the container includes reading checkpointed images of the service from the container checkpoint cache.

Optionally, the images of a container include the initialized state of the container.

Optionally, at least partially during step (a) and upon request of the client for the service, containers are loaded and/or initialized and the service is run in the containers, in particular if so far non-selected containers are used.

Optionally, while steps (a) and/or (b) are ongoing and, at the same time, a request for a service and, hence, for a container is received, before step (c) is fulfilled, containers continue to be initialized directly from the container registry.

Optionally, upon each request, the service caching manager may check the container checkpoint cache. If the related images are there, the service may be served by restoring. Otherwise, the image may be loaded from the container registry

One or more of these optional feature may, in combination or isolated, further improve efficiency and reliability.

The invention also relates to a data processing apparatus comprising a processor configured to perform the method; a computer program comprising instructions which, when the program is executed by a computer, cause the computer to carry out the steps of the method; and a computer-readable medium comprising instructions which, when executed by a computer, cause the computer to carry out the steps of the method.

The apparatus may optionally comprise an API-Server configured to record the time taken for initialization of containers and/or for recording the number of container starts, for step (a).

The apparatus may optionally further comprise a service caching manager configured for requesting checkpointing for the selected containers, for step (c).

The apparatus may optionally further comprise a checkpointing and restoring unit configured to start a selected container, initialize the container and get the checkpoint, for step (c), and/or configured to read the checkpoint and to restore the container from the checkpoint, for step (d).

### Brief description of the drawings

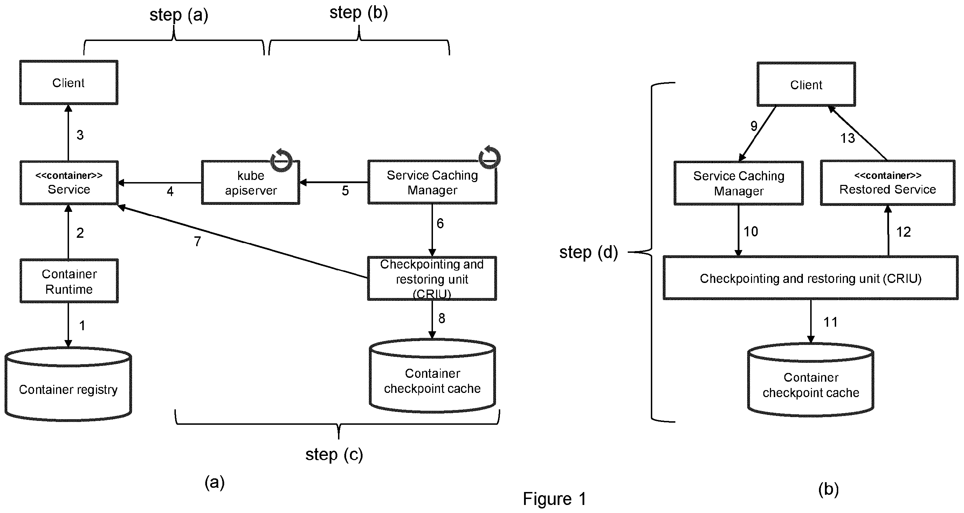

- Figure 1(a): is a schematic diagram reflecting phase 1 of an embodiment of the invention.
- Figure 1(b): is a schematic diagram reflecting phase 2 of an embodiment of the invention.

### Detailed description

Figures 1(a) and 1(b) show steps carried out according to one embodiment of the invention. Phase 1 checkpoints the state of the services (e.g. with a long startup delay after initialization) and phase 2 enables (faster) startup of such services.

Phase 1 checkpoints the container state according to steps (a) to (c), here shown in eight, more specific steps as an example. First, the system pulls the image of the service from the registry (step 1). Then, the system initializes the container, and runs the service inside the container (step 2). The service then starts serving requests from the client (step 3). This may be seen as the general procedure when using containers. At the same time, e.g. a Kube API-Server continuously monitors the time taken for initialization and the number of requests from the client for each service (step 4). According to these metrics, the service caching manager gets a dynamic list of containers that take a long time for initialization or receive a high number of requests from the client (step 5). Steps 4 and 5 are carried out repeatedly over time. In other words, the (Kube) API server and the service caching manager are repeatedly updated. The service caching manager then requests CRIU to checkpoint the containers in the provided list (step 6). CRIU checkpoints such containers after initialization (step 7), stores their state in a set of images, and store them in a registry (step 8). Accordingly, in step (c), checkpointing the selected containers includes, per selected container, starting the container, initializing the container, and getting the checkpoint. Also, in step (c), storing a checkpoint includes storing the selected container state in a set of images, and writing the checkpoint including the set of images in the container checkpoint cache. In particular, the images of a container include the initialized state of the container.

Phase 2 enables fast startup of the services using the stored checkpoints in the container checkpoint registry. Phase 2 corresponds to step (d), here shown in five subsequent, more specific steps as an example. At least partially during step (a) and upon request of the client for the service, containers are loaded and/or initialized and the service is run in the containers.

Upon receiving a request from a client (step 9), the service caching manager requests restoring the service from e.g. CRIU (step 10). To do this, CRIU reads the checkpointed images of the service from the container checkpoint registry (step 11) and restores the container from the stored state (step 12). CRIU may restore the stored state fast and the service can skip the entire long initialization procedure, since after restoring the saved state it is already in the desired initialized state. The service then starts serving requests from the client (step 13).

While steps (a) and/or (b) are ongoing and, at the same time, already a request for a service and, hence, for a container is received, before step (c) is fulfilled, containers continue to be initialized directly from the container registry.

Upon each request by the clients, the service caching manager checks the container checkpoint cache. If the related images are in the container checkpoint cache, the service will be served by restoring from the container checkpoint cache. Otherwise, the image will be loaded from the container registry.

In the hypothetical event that a selected container becomes, over time, a "non-selected" container, e.g. since it is used less frequently, the corresponding container may be removed (e.g. manually or by the service caching manager) from the container checkpoint cache.

The detailed description of the invention is provided with respect to the embodiment depicted in the figure. Obvious variations and alternatives may occur to the skilled person, based on the summary of the invention. These variations and alternatives are part of the invention in so far they are covered by the appended claims.

### Steps in the embodiment of Figure 1:

- 1: load container
- 2: start container + initialize container
- 3: serve request
- 4: record number of container starts
- 5: get the list of containers
- 6: request checkpoints for most started containers
- 7: start container + initialize + get checkpoint
- 8: write checkpoint
- 9: request service
- 10: request restore
- 11: read checkpoint
- 12: restore from checkpoint
- 13: serve request

## Claims

1. A computer-implemented method of handing a containerized environment in connection with services requested by clients, comprising the following steps:
(a) monitoring the time taken for initialization of containers and/or the number of requests containers receive from the client for the service,
(b) determining, based on the monitoring, selected containers amongst the containers,
(c) checkpointing the selected containers and storing a checkpoint per selected container in a container checkpoint cache,
(d) upon request of the client for the service, reading a corresponding checkpoint in the container checkpoint cache and restoring the corresponding selected container from the stored checkpoint, to serve the request.

2. Method of claim 1, wherein a dynamic list of the selected containers as determined in step (b) is generated.

3. Method of claim 1 or 2, wherein in step (c), a service caching manager requests checkpointing for the selected containers, optionally the selected containers on a list.

4. Method of any of the preceding claims, wherein in step (c), checkpointing the selected containers includes, per selected container, starting the container, initializing the container and getting the checkpoint.

5. Method of any of the preceding claims, wherein in step (c), storing a checkpoint includes storing the selected container state in a set of images, and writing the checkpoint including the set of images in the container checkpoint cache.

6. Method of any of the preceding claims, wherein in step (d), a service caching manager requests to restore the service.

7. Method of any of the preceding claims, wherein in step (d), restoring the container includes reading checkpointed images of the service from the container checkpoint cache.

8. Method of claim 7, wherein the images of a container include the initialized state of the container.

9. Method of any of the preceding claims, wherein at least partially during step (a) and upon request of the client for the service, containers are loaded and/or initialized and the service is run in the containers.

10. A data processing apparatus comprising a processor configured to perform the method of any of the preceding claims.

11. Apparatus of claim 10, further comprising an API-Server configured to record the time taken for initialization of containers and/or for recording the number of container starts, for step (a).

12. Apparatus of claim 10 or 11, further comprising a service caching manager configured for requesting checkpointing for the selected containers, for step (c).

13. Apparatus of claim 10 or 11 or 12, further comprising a checkpointing and restoring unit configured to start a selected container, initialize the container and get the checkpoint, for step (c), and/or configured to read the checkpoint and to restore the container from the checkpoint, for step (d).

14. A computer program comprising instructions which, when the program is executed by a computer, cause the computer to carry out the steps of the method of any of the preceding claims 1 to 9.

15. Computer-readable medium comprising instructions which, when executed by a computer, cause the computer to carry out the steps of the method of any of the preceding claims 1 to 9.
